# EUROPÄISCHE PATENTSCHRIFT

(11) **EP 0 893 622 B1**
(45) Veröffentlichungstag und Bekanntmachung des Hinweises auf die Patenterteilung: **11.07.2001**
(21) Anmeldenummer: 98111278.2
(22) Anmeldetag: 18.06.1998
(51) Int. Cl.: F16H 19/00, H01H 3/22, F16H 1/16, F16H 7/02, F16H 57/02

(54) **Lastgetriebe für einen Motorantrieb**
Gearbox for a motor-drive
Transmission pour un entraînement électrique

(30) Priorität: 23.07.1997 DE 19731705
(43) Veröffentlichungstag der Anmeldung: 27.01.1999
(73) Patentinhaber: MASCHINENFABRIK REINHAUSEN GmbH, 93059 Regensburg (DE)
(72) Erfinder: Dohnal, Dieter, Dr.-Ing., 93138 Lappersdorf (DE); Friedrich, Werner, Dipl.-Ing. (FH), 93049 Regensburg (DE); Lauterwald, Rolf, Ing. grad., 93186 Pettendorf (DE); Schmid, Richard, 93173 Fussenberg (DE); Wilhelm, Gregor, Dipl.-Ing. (FH), 93509 Regenburg (DE)

(56) Entgegenhaltungen:
- DE-A- 4 142 548
- DE-U- 29 600 462
- GB-A- 1 251 243
- US-A- 3 324 258
- US-A- 3 432 780

## Beschreibung

Die Erfindung betrifft ein Lastgetriebe für einen Motorantrieb zur Einstellung eines Stufenschalters, eines Umstellers oder Tauchkernspule auf eine jeweils gewünschte Betriebsstellung.

Die eingangs genannten Motorantriebe dienen zur - motorischen - Umschaltung insbesondere eines Stufenschalters, der an einen Stufentransformator angeschlossen ist. Durch die jeweilige Betätigung des Motorantriebes erfolgt also im Ergebnis eine Umschaltung von einer Wicklungsanzapfung des jeweiligen Stufentransformators auf eine andere. Ein Lastgetriebe ist ein wesentlicher Bestandteil eines solchen Motorantriebes. Es dient dazu, die Drehung eines elektrischen Antriebsmotors auf geeignete Weise in eine Drehbewegung einer Abtriebswelle umzusetzen, die den jeweiligen Stufenschalter oder dgl. betätigt.

Ein solches Lastgetriebe ist aus der Firmenschrift "Betriebsanweisung Motorantrieb MA7" der Anmelderin bekannt.

Das bekannte Lastgetriebe ist als Riemengetriebe ausgebildet. Als Übertragungselement wird ein Poly-V-Riemen aus Kunststoffverwendet, dessen Breite der jeweiligen Motorleistung des Elektromotors angepaßt ist.
Das bekannte Lastgetriebe weist eine offene Gehäuseplatine auf an der der Antriebsmotor angeflanscht ist; auf dessen Welle befindet sich unmittelbar das Antriebsrad für den Riementrieb. Weiterhin ist in dieser Gehäuseplatine ein Lager für die Abtriebswelle, die vom Riementrieb nach außen führt, vorgesehen. Mit der Abtriebswelle verbunden sind das Abtriebsrad des Riementriebes und ein Kegelrad an der unteren freien Seite, das Bestandteil eines Kegelradgetriebes für einen Handantrieb ist.

Beim bekannten Lastgetriebe wird beispielsweise ein Motor mit 1.500 U/min. verwendet. Diese Drehzahl wird durch das Riemengetriebe auf eine Drehzahl des Abtriebsrades von 375 U/min. untersetzt, wobei die Abtriebswelle, die zum Stufenschalter führt, üblicherweise 33 Umdrehungen für eine Schaltung dieses Stufenschalters vollführt.

Seitlich am Lastgetriebe ist ein Steuergetriebe angebaut, das eine Nockenscheibe zur mechanischen Betätigung diverser Schaltelemente und weiterer Bauteile zur Steuerung und zur Schaltanzeige aufweist.

Die offene Gehäuseplatine des bekannten Lastgetriebes wird bei der Montage nachträglich mit einer weiteren Gehäuseplatine im Motorantrieb und weiteren Bauteilen verschraubt. Auf dieser weiteren Gehäuseplatine befindet sich auch die zweite, untere Lagerstelle der Abtriebswelle, die senkrecht im Motorantrieb geführt ist und oben das Gehäuse des kompletten Motorantriebes, der das Lastgetriebe und die weiteren Bauteile beinhaltet, verläßt.

Ein Lastgetriebe gemäß dem Oberbegriff des Anspruchs 1 ist aus DE-A-4 142 548 bekannt.

Nachteilig am bekannten Lastgetriebe sind vor allem die erheblichen Genauigkeitsanforderungen, die einzuhalten sind, insbesondere müssen die Lagerstellen der Abtriebswelle genau fluchten. Dies ist nur schwierig zu erreichen, da, wie beschrieben, sich eine Lagerstelle direkt auf der oberen Gehäuseplatine des Lastgetriebes befindet, die zweite untere Lagerstelle aber auf der separaten weiteren Gehäuseplatine angeordnet ist, die erst mit der oberen Gehäuseplatine verschraubt werden muß. Von der Sorgfalt der Montage hängt also die Genauigkeit der Lage der Wellen zueinander und zu den weiteren Bauteilen ab.
Ein weiterer Nachteil am bekannten Lastgetriebe besteht darin, daß die Welle des antreibenden Elektromotors direkt die Antriebsscheibe des Riementriebes trägt. Muß etwa bei Inspektionen dieser Motor ausgetauscht werden und wird von der oberen Getriebeplatine abgeflanscht, fällt praktisch das gesamte Lastgetriebe als Baugruppe auseinander.

Aufgabe der Erfindung ist es, ein weiterentwickeltes Lastgetriebe der gattungsgemäßen Art anzugeben, das eine komplette, funktionsfähige Baugruppe darstellt, eine reduzierte mechanische Bearbeitung und einen geringeren Montageaufwand ermöglicht und insbesondere eine hohe Genauigkeit der Lage der Wellen zueinander dadurch gestattet, daß die Bearbeitung der Lagerstellen in einer einzigen Aufspannung erfolgen soll, d.h. keine erst spätere räumliche Zuordnung durch nachträgliche Montage mehr notwendig sein soll.

Diese Aufgabe wird durch ein Lastgetriebe mit den Merkmalen des ersten Patentanspruches gelöst.

Die Unteransprüche betreffen besonders vorteilhafte Weiterbildungen der Erfindung.

Besonders vorteilhaft am erfindungsgemäßen Lastgetriebe ist das einteilige Gehäuse, das das gesamte Getriebe umschließt und es damit ermöglicht, das gesamte Lastgetriebe als separate, modulare Baugruppe zu fertigen.
Dieses einteilige Gehäuse nimmt alle notwendigen Bauteile auf; es ist nicht mehr erforderlich, weitere Bauteile erst noch montieren zu müssen, um eine Funktionsfähigkeit zu erreichen. Auch ohne Antriebsmotor bleibt ein vollständiges, komplettes Lastgetriebe mit Antriebs- und Abtriebsscheibe und vollständigem Handantrieb erhalten.
Dadurch, daß sich alle Lagerstellen der Wellen des Lastgetriebes in diesem einteiligen Gehäuse befinden, ist eine definierte räumliche Lage der Wellen gegeben, ohne daß es hier zu Fehlern aufgrund nachfolgender Montageschritte kommen könnte.

Die Erfindung soll nachfolgend anhand von Zeichnungen noch näher erläutert werden.

Es zeigen:

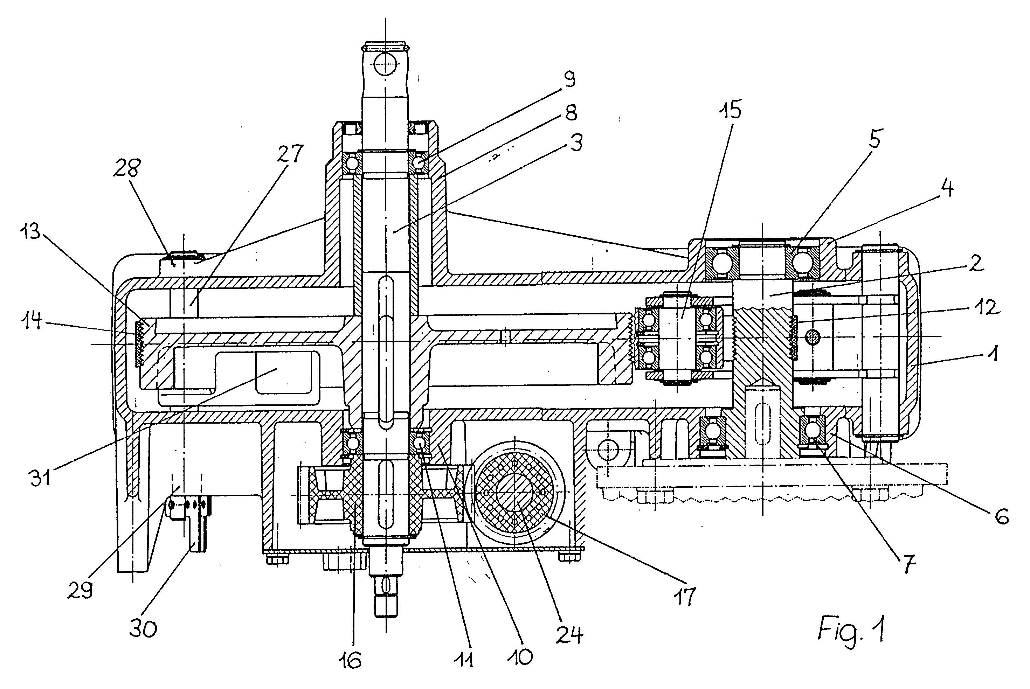

- Figur 1: ein erfindungsgemäßes Lastgetriebe in Schnittdarstellung

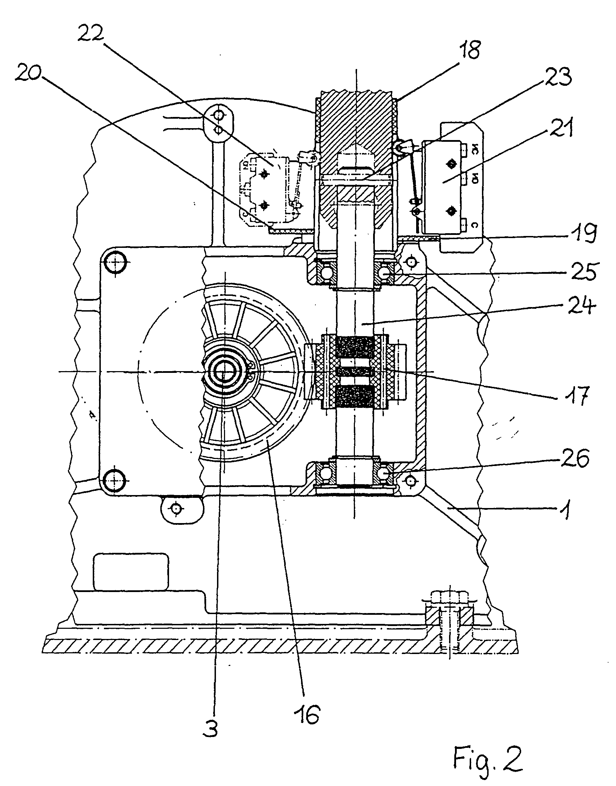

- Figur 2: einen Detailschnitt dieses Lastgetriebes
- Figur 3: dieses Lastgetriebe in schematischer Darstellung von oben, eingebaut in das Gehäuse des kompletten Motorantriebes.

Das erfindungsgemäße Lastgetriebe ist von einem einteiligen Lastgetriebegehäuse 1 umschlossen. Dieses Lastgetriebegehäuse 1 umschließt das Lastgetriebe oben, unten und an drei der vier Seitenflächen und nimmt alle zur Funktion erforderlichen Bauteile und Lagerstellen auf wie nachfolgend noch näher erläutert wird.
Das Lastgetriebegehäuse 1 wird senkrecht von einer Antriebswelle 2 und einer Abtriebswelle 3, die parallel zueinander verlaufen, durchdrungen. An der oberen Seite ist ein erster oberer Lagerflansch 4 vorgesehen, der ein erstes oberes Lager 5 aufnimmt, an der unteren Seite ist ein erster unterer Lagerflansch 6 vorgesehen, der ein erstes unteres Lager 7 aufnimmt. Die Antriebswelle 2 ist in den ersten Lagern 5, 7 gelagert.
Weiterhin ist an der oberen Seite des Lastgetriebegehäuses 1 ein zweiter oberer Lagerflansch 8 vorgesehen, der ein zweites oberes Lager 9 aufnimmt, sowie an der unteren Seite ein zweiter unterer Lagerflansch 10, der ein zweites unteres Lager 11 aufnimmt. Die Abtriebswelle 3 ist in den zweiten Lagern 9, 11 gelagert.
Die Antriebswelle 2 steht außerhalb des Lastgetriebegehäuses 1 mit einem hier nicht dargestellten Antriebsmotor aufbekannte Weise in Verbindung.
Die Abtriebswelle 3 ihrerseits steht außerhalb des Lastgetriebegehäuses 1 über ein Gestänge mit dem zu betätigenden Stufenschalter o.ä. in Verbindung.

Im Inneren des Lastgetriebegehäuses 1 weist die Antriebswelle 2 eine Antriebsscheibe 12 und die Abtriebswelle 3 eine dazu fluchtende Abtriebsscheibe 13 auf.
Zwischen Antriebsscheibe 12 und Abtriebsscheibe 13 ist auf an sich bekannte Weise ein Riemen 14 gespannt. Bestandteil des Riementriebes ist noch eine Spannrolle 15, der dazugehörige Spannrollenhebel und dessen Lagerung ebenfalls im Lastgetriebegehäuse 1 sind in den Zeichnungen dargestellt, sollen hier aber nicht näher erläutert werden.

An der Unterseite des Lastgetriebegehäuses 1 befindet sich weiterhin ein komplettes Schraubradgetriebe, bestehend aus zwei Schraubrädern 16, 17. Das erste Schraubrad 16 steht direkt mit der Abtriebswelle 3 in Verbindung. Das zweite Schraubrad 17 seinerseits steht mit einer Handwelle 24 in Verbindung, die beidseitig mittels Lagern 25, 26 gelagert ist. Eine Führungsbuchse 18 kann einen nicht näher dargestellten Handantrieb, etwa eine Handkurbel, aufnehmen. Diese Handkurbel ist besonders vorteilhaft an ihrer Stirnseite mit einem Stift 23 versehen, so daß sie mit einem Schlitz in der Handwelle 24 korrespondiert und eine formschlüssige Verbindung hergestellt werden kann, derart, daß eine Drehung der in der Führungsbuchse 18 geführten Handkurbel über die Handwelle 24 auf die Schraubräder 17, 16 übertragen werden kann. Damit ist bei Bedarf eine manuelle Betätigung des Motorantriebes möglich.
Weiterhin sind an der Führungsbuchse 18 zwei seitliche Aufnahmen 19, 20 für Mikroschalter 21, 22 vorgesehen. Diese Mikroschalter 21, 22 werden beim Einführen der Handkurbel betätigt und setzen ihrerseits den Motorantrieb still, was aus Sicherheitsgründen vor einer manuellen Betätigung unbedingt notwendig ist.
Weiterhin ist innerhalb des Lastgetriebegehäuses noch eine Klinkenwelle 27 zwischen Lagern 28, 29 gelagert, die wiederum mit einem Klinkenhebel 30 und einer Sperrklinke 31 in Verbindung steht und auf an sich bekannte Weise die mechanische Endstellungsbegrenzung des Lastgetriebes realisiert.

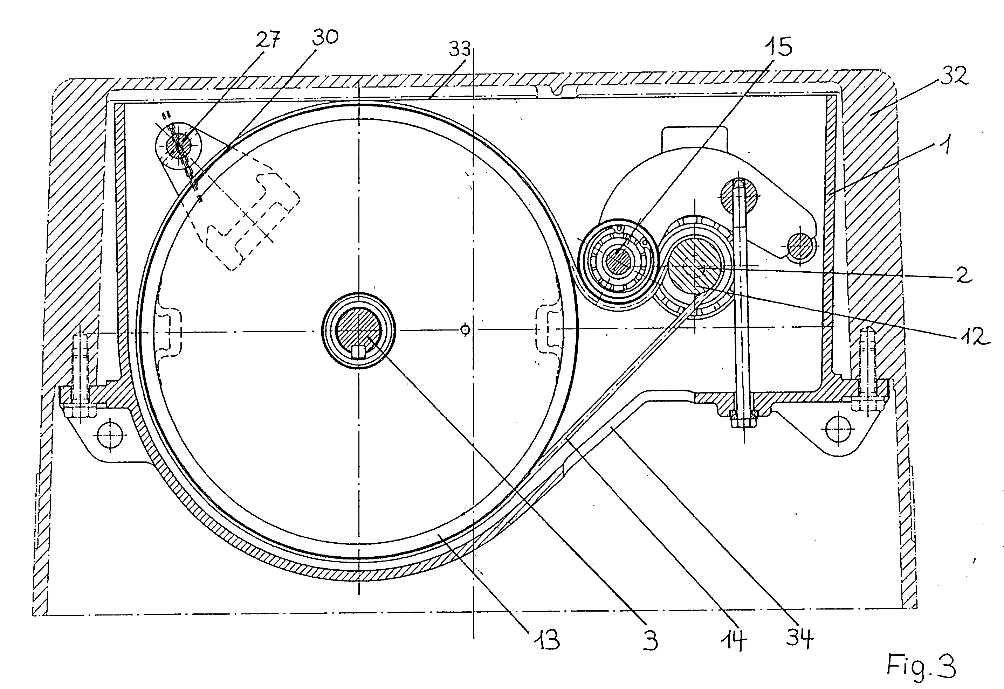

In Figur 3 ist eine besonders vorteilhafte Anordnung des erfindungsgemäßen, als komplette, voll funktionsfähige Baugruppe ausgebildeten Lastgetriebes im Gehäuse 32 des vollständigen Motorantriebes gezeigt. Das Lastgetriebegehäuse 1 ist dabei derart im Gehäuse 32 befestigt, daß die einzige offene Seite 33 des Lastgehäuses 1 durch die Rückwand des Gehäuses 32 abgedeckt wird. Damit entsteht de facto ein vollständig geschlossenes Lastgetriebegehäuse.

Um dennoch beispielsweise die Riemenspannung kontrollieren zu können, ist es dabei sinnvoll auf der vorderen Seite des Lastgetriebegehäuses 1 eine Inspektionsöffnung 34 vorzusehen.

Zusammengefaßt verdeutlichen die Figuren, daß beim erfindungsgemäßen Lastgetriebe alle funktionswichtigen Bauteile und -gruppen direkt im oder am Lastgetriebegehäuse 1 angeordnet und fest mit diesem verbunden sind:
- der komplette Riementrieb einschließlich der An- und Abtriebswellen und deren Lagerungen
- der komplette Handantrieb mit dem dazugehörigen Getriebe, dem Handkurbeleingriff, der Führungsbuchse und den Mikroschaltern die komplette mechanische Endstellungssperre einschließlich der Klinkenwelle und deren Lagerung.

Das erfindungsgemäße Lastgetriebe ist somit als eigenständige, voll funktionsfähige Baugruppe ausgebildet, die vormontiert, separat betrieben und geprüft und auf einfache Weise im Gehäuse des kompletten Motorantriebes untergebracht werden kann.

### Bezugszeichenaufstellung:

- 1: Lastgetriebegehäuse
- 2: Antriebswelle
- 3: Abtriebswelle
- 4: erster oberer Lagerflansch für Antriebswelle
- 5: erstes oberes Lager für Antriebswelle
- 6: erster unterer Lagerflansch für Antriebswelle
- 7: erstes unteres Lager für Antriebswelle
- 8: zweiter oberer Lagerflansch für Abtriebswelle
- 9: zweites oberes Lager für Abtriebswelle
- 10: zweiter unterer Lagerflansch für Abtriebswelle
- 11: zweites unteres Lager für Abtriebswelle
- 12: Antriebsscheibe
- 13: Abtriebsscheibe
- 14: Riemen
- 15: Spannrolle
- 16: erstes Schraubrad
- 17: zweites Schraubrad
- 18: Führungsbuchse
- 19: erste Aufnahme für Mikroschalter
- 20: zweite Aufnahme für Mikroschalter
- 21: erster Mikroschalter
- 22: zweiter Mikroschalter
- 23: Stift
- 24: Handwelle
- 25: erstes Lager für Handwelle
- 26: zweites Lager für Handwelle
- 27: Klinkenwelle
- 28: erstes Lager für Klinkenwelle
- 29: zweites Lager für Klinkenwelle
- 30: Klinkenhebel
- 31: Sperrklinke
- 32: Motorantriebsgehäuse
- 33: offene Seite des Lastgetriebegehäuses
- 34: Inspektionsöffnung

## Patentansprüche

1. Lastgetriebe für einen Motorantrieb zur Einstellung eines Stufenschalters, eines Umstellers oder einer Tauchkernspule auf eine jeweils gewünschte Betriebsstellung,
wobei das Lastgetriebe eine mit einem Antriebsmotor in Verbindung stehende Antriebswelle (2) und eine mit dem einzustellenden Stufenschalter o. dg. in Verbindung stehende Abtriebswelle (3) aufweist, die über ein Getriebe, vorzugsweise einen Riementrieb, miteinander gekoppelt sind, wobei das Lastgetriebe weiterhin Mittel (17-26) zur möglichen manuellen Betätigung des gesamten Motorantriebes durch eine Handkurbel aufweist,
wobei das Lastgetriebe weiterhin Mittel (27-31) zur mechanischen Endstellungsbegrenzung bzw. - sperrung aufweist, wobei das Lastgetriebe als komplette modulare Baugruppe ausgebildet und von einem einteiligen Lastgetriebegehäuse (1) weitestgehend umschlossen ist, derart, daß das Lastgetriebegehäuse (1) oben, unten und an drei der vier Seitenflächen zumindest weitestgehend geschlossen ist,
wobei das Getriebe zwischen Antriebswelle (2) und Abtriebswelle (3) im Inneren des Lastgetriebegehäuses (1) angeordnet ist,
wobei alle Mittel zur manuellen Betätigung im Inneren des Lastgetriebgehäuses (1) oder in dessen Wandung angeordnet sind, und wobei alle Mittel zur mechanischen Endstellungsbegrenzung bzw. -sperrung ebenfalls im Inneren des Lastgetriebegehäuses (1) oder in dessen Wandung angeordnet sind,
**dadurch gekennzeichnet,** daß jeweils obere und untere Lager (5, 7) der Antriebswelle (2) sowie obere und untere Lager (9, 11) der Abtriebswelle (3) in der Wandung des Lastgetriebegehäuses (1) angeordnet sind.

2. Lastgetriebe nach Patentanspruch 1,
**dadurch gekennzeichnet,**
daß die Mittel zur manuellen Betätigung eine Führungsbuchse (18) zur Aufnahme einer Handkurbel, eine Handwelle (24) zur Übertragung der Drehbewegung der Handkurbel und ein aus zwei Schraubrädern (16,17), vorzugsweise schrägverzahnten Stirnrädern, bestehendes Getriebe zur Weiterleitung dieser Drehbewegung auf die Abtriebswelle (3) aufweisen und die Lager (25, 26) der Handwelle (24) in der Wandung des Lastgetriebegehäuses angeordnet sind

3. Lastgetriebe nach Patentanspruch 2,
**dadurch gekennzeichnet,**
daß die Führungsbuchse (18) mindestens eine Aufnahme (19, 20) für mindestens einen Mikroschalter (21, 22) aufweist.

4. Lastgetriebe nach Patentanspruch 1 oder 2 oder 3,
**dadurch gekennzeichnet,**
daß die Mittel zur mechanischen Endstellungsbegrenzung bzw. -sperrung eine Klinkenwelle (27) mit einem Klinkenhebel (30) und einer Sperrklinke (31) aufweisen und die Lager (28, 29) der Klinkenwelle (27) in der Wandung des Lastgetriebegehäuses (1) angeordnet sind.

## Claims

1. Load gear for a motor drive for setting a tap selector, a tap changer or a sucking solenoid to a respective desired operational setting, wherein the load gear comprises a drive shaft (2) connected with a drive motor and a driven shaft (3) connected with the tap selector or the like to be set, which shafts are coupled together by way of a gear, preferably a belt drive, wherein the load gear further comprises means (17 to 26) for possible manual actuation of the entire motor drive by a hand crank, wherein the load gear further comprises means (27 to 31) for mechanical end setting limitation or blocking, wherein the load gear is constructed as a complete modular subassembly and is largely enclosed by a one-piece load gear housing (1) in such a manner that the load gear housing (1) is largely closed at least at the top, bottom and three of the four side surfaces, wherein the gear is arranged between drive shaft (2) and driven shaft (3) in the interior of the load gear housing (1), wherein all means for manual actuation are arranged in the interior of the load gear housing (1) or in the walls thereof and wherein all means for mechanical end setting or blocking are similarly arranged in the interior of the load gear housing (1) or in the wall thereof, characterised in that upper and lower bearings (5, 7) of the drive shaft (2) and upper and lower bearings (9, 11) of the driven shaft (3) are each arranged in the walls of the load gear housing (1).

2. Load gear according to patent claim 1, characterised in that the means for manual actuation comprise a guide bush (18) for receiving a hand crank, a hand shaft (24) for transmission of the rotational movement of the hand crank and a gear, which consists of two skew gearwheels (16, 17), preferably helically-toothed gearwheels, for transmission of this rotational movement to the driven shaft (3) and the bearings (25, 26) of the hand shaft (24) are arranged in the walls of the load gear housing.

3. Load gear according to patent claim 2, characterised in that the guide bush (18) comprises at least one mount (19, 20) for at least one microswitch (21, 22).

4. Load gear according to patent claim 1, 2 or 3, characterised in that the means for end setting limitation or blocking comprise a pawl shaft (27) with a pawl lever (30) and a pawl catch (31) and the bearings (28, 29) of the pawl shaft (27) are arranged in the walls of the load gear housing (1).

## Revendications

1. Transmission de charge pour un entraînement électrique, destinée à régler un commutateur de charge, un convertisseur ou une bobine à noyau plongeur sur la position de fonctionnement souhaitée,
• la transmission, ayant un arbre moteur (2) relié à un moteur et un arbre de sortie (3) relié au commutateur d'échelons à régler ou moyen analogue, ces arbres étant couplés par une transmission de préférence une transmission à courroie,
• la transmission comportant des moyens (17, 26) pour un éventuel actionnement de l'ensemble de l'entraînement à moteur par une manivelle,
• la transmission comporte en outre des moyens (27-31) pour limiter mécaniquement la position ou le blocage de fin de course,
• la transmission étant réalisée sous la forme d'un ensemble modulaire complet et étant entourée, dans une très large mesure, par un boîtier unique (1), de façon que le boîtier (1) soit fermé au-dessus, en dessous, et sur trois des quatre parois latérales, au moins en grande partie,
• la transmission étant prévue entre l'arbre moteur (2) et l'arbre de sortie (3) à l'intérieur du boîtier (1),
• tous les moyens d'actionnement manuels étant prévus à l'intérieur du boîtier (1) ou dans sa paroi, et
• tous les moyens mécaniques de blocage ou de limitation de position de fin de course étant également prévus à l'intérieur du boîtier (1) de la transmission ou dans sa paroi,
caractérisée en ce que
le palier supérieur et le palier inférieur (5, 7) respectifs de l'arbre d'entraînement (2) ainsi que le palier supérieur et le palier inférieur (9, 11) de l'arbre de sortie (3), sont prévus dans la paroi du boîtier (1) de la transmission.

2. Transmission de charge selon la revendication 1,
caractérisée en ce que
• les moyens d'actionnement manuels se composent d'un coussinet de guidage (18) pour recevoir une manivelle, d'un arbre à manivelle (24) pour transmettre le mouvement de rotation de la manivelle, et de deux roues à vis (16, 17), de préférence des pignons à denture frontale inclinée, formant une transmission pour transmettre ce mouvement de rotation à l'arbre de sortie (3), et
• les paliers (25, 26) de l'arbre à manivelle (24) sont prévus dans la paroi du boîtier de la transmission.

3. Transmission de charge selon la revendication 2,
caractérisée en ce que
le coussinet de guidage (18) comporte au moins un logement (19, 20) pour au moins un microcontacteur (21, 22).

4. Transmission de charge selon l'une quelconque des revendications 1, 2 ou 3,
caractérisée en ce que
les moyens mécaniques de blocage ou de limitation de fin de course comportent un arbre à cliquet (27) avec un levier à cliquet (30) et un cliquet (31, des paliers (28, 29) de l'arbre à cliquet (27) étant prévus dans la paroi du boîtier de transmission (1).
